# EUROPÄISCHE PATENTSCHRIFT

(11) **EP 1 157 671 B1**
(45) Veröffentlichungstag und Bekanntmachung des Hinweises auf die Patenterteilung: **22.11.2006**
(21) Anmeldenummer: 01112528.3
(22) Anmeldetag: 23.05.2001
(51) Int. Cl.: A61C 1/18

(54) **Zahnärztliches Handstück mit einem drehbar gelagerten Rotor**
Dental handpiece with devices for tensioning a grip-sleeve with a head part
Pièce à main dentaire avec des moyens de serrage d'un manche avec une pièce de la tête

(30) Priorität: 24.05.2000 DE 10025416
(43) Veröffentlichungstag der Anmeldung: 28.11.2001
(73) Patentinhaber: Sirona Dental Systems GmbH, 64625 Bensheim (DE)
(72) Erfinder: Goisser, Siegfried, 64683 Einhausen (DE); Hain, Johann, 64646 Heppenheim (DE)
(74) Vertreter: Sommer, Peter

(56) Entgegenhaltungen:
- US-A- 3 376 084
- US-A- 4 219 330
- US-A- 4 249 896
- US-A- 5 676 542

## Beschreibung

### Technisches Gebiet

Die Erfindung betrifft ein zahnärztliches Handstück, welches ein Kopfteil mit einem mittels einer Lageranordnung drehbar gelagerten Rotor umfasst. Die Lageranordnung umfasst weiterhin einen in Richtung einer Drehachse des Rotors verschiebbar gehaltenen äußeren Lagerring mit einer axialen Anschlagfläche. Darüber hinaus weist eine Lageraufnahme des äußeren Lagerrings eine Auflagefläche auf, auf der ein die Vorspannung der Lageranordnung definierendes Federelement, vorzugsweise eine Wellfeder liegt, wobei das Federelement mit der axialen Anschlagfläche des äußeren Lagerrings zusammenwirkt,

### Stand der Technik

Aus dem Stand der Technik sind zahnärztliche Handstücke bekannt, bei denen die Rotorpakete der Turbinen im Gehäuse des Kopfteils durch O-Ringe gelagert sind. Die Lager sind so nicht starr im Kopfgehäuse angeordnet, sondern werden in axialer Richtung, also in Richtung der Drehachse des Rotors beweglich gehalten. Die O-Ringe dienen außerdem dazu, eine gewisse Vorspannung für die Lageranordnung aufzubringen.

Bekannt ist es außerdem, zumindest das untere, der Aufnahme des rotierenden Werkzeugs benachbarte Lager mittels gummielastischer Elemente gegenüber dem Kopfgehäuse abzustützen. Diese Maßnahmen sollen einerseits dazu dienen, das Lager gegen Eindringen von Schmutz zu schützen und andererseits, von der Rotation des Rotors ausgehende Vibrationen zu absorbieren.

Gummielastische Stützelemente werden bei der aus US 4,219,330 A bekannten Konstruktion eingesetzt, mit der das Ziel angestrebt wird, den Austausch des gesamten Rotorpakets zu vereinfachen. Bei dieser Konstruktion ist der Außenring des unteren Lagers mittels eines Formteils aus gummielastischem Material im Kopfgehäuse gehaltert, wobei das Formteil den am äußeren Lagerring vorhandenen O-Ring übergreift. Damit eine Vorspannung aufgebracht wird, ist eine gewellte metallische Feder vorgesehen, die sich an der Stirnseite des äußeren Lagerringes abstützt und das Formteil gegen das Kopfgehäuse drückt.

Bei der aus US 5,676,542 A bekannten Konstruktion ist zwischen Innenring und Außenring des Lagers ein mittels eines Sprengringes gehaltener elastischer Dichtring eingesetzt. Der Dichtring dient ausschließlich zur Abdichtung des Lagers, insbesondere der Spalte zwischen Innen- und Außenring des Lagers. Eine definierte Vorspannung zwischen dem äußeren Lagerring und dem Kopfgehäuse kann durch diesen Dichtring nicht erzielt werden.

Bei der aus US 3,376,084 A bekannten Konstruktion sind an beiden Gehäuseenden stirnseitig dünne Metallscheiben angeordnet, die in gummielastischen Dämpfungselementen eingelegt sind. Die Dämpfungselemente wiederum sind in ringförmigen Ausnehmungen der äußeren Lagerringe eingelegt und stützen sich einerseits an den zylindrischen Gehäusewandungen und andererseits an Wandungen von auf das Gehäuse stirnseitig aufschraubbaren Abschlußdeckeln ab. Im montierten Zustand liegen die Dämpfungselemente an den Wandungen mit einer gewissen Vorspannung an, wodurch sie die vom Rotor erzeugten Vibrationen absorbieren können.

Nachteilig bei den bekannten Konstruktionen ist, dass die dort vorgesehenen gummielastischen Elemente in Abhängigkeit des zur Lagerschmierung verwendeten Schmiermittels aufquellen, wodurch ihre Elastizität verändert wird und das Aufbringen einer definierten Vorspannung zur definierten Fixierung der Lager im Kopfgehäuse erschwert ist.

Die Aufgabe der Erfindung besteht darin, die Lageranordnung eines zahnärztlichen Handstücks der eingangs genannten Gattung so zu verbessern, dass die Federcharakteristik der elastischen Lagerung in axialer Richtung mit einer definierten Vorspannung eingestellt werden kann, die dann über die Laufzeit des Rotors weitgehend erhalten bleibt, wodurch mit dem Handstück stets im Bereich einer optimalen Lagervorspannung gearbeitet werden kann.

### Darstellung der Erfindung

Gemäß der Erfindung ist im Bereich der Auflagefläche am äußeren Umfang ein Anschlag angeordnet, dessen Anschlagsfläche gegenüber der Auflagefläche eine Höhe aufweist, die mindestens der kleinsten zulässigen Dicke des Federelements entspricht. Die kleinste zulässige Dicke ist die Dicke, auf die das Federelement zusammengedrückt werden darf, ohne dauerhaft eine gedrückt werden darf, ohne dauerhaft eine Veränderung der Federkennlinie hervorzurufen. Diese Dicke setzt sich also zusammen aus der Materialdicke des Federquerschnitts und einem Federweg, der nicht unterschritten werden darf.

Der Vorteil einer derartigen Anordnung besteht darin, dass das Federelement nicht plattgedrückt wird, was eine Überlastung der Wellfeder bedeuten würde. Durch den Anschlag ist eine kontrollierte Verformung der Wellfeder innerhalb eines zulässigen Federwegs eingestellt. Die Federcharakteristik des Federmittels bleibt aufgrund der Vermeidung von Überlast lange erhalten. Darüber hinaus kann durch den Anschlag der Arbeitsbereich des Federmittels optimal entsprechend der Federkennlinie eingestellt werden. Dabei ist eine weiche Aufhängung des Rotors gewünscht, um die von dem Bearbeitungswerkzeug auf den Rotor übertragenen Schwingungen zu entkoppeln. Schließlich wird die Lageranordnung im Bereich der optimalen Lagervorspannungen betrieben, so lange das Lager nicht gegen den Anschlag läuft, wobei der wegen der erforderlichen Präzision relativ geringe Verstellweg ausgenutzt wird.

Das Federelement kann durch unmittelbaren oder mittelbaren axialen Formschluß mit dem Gehäuse gesichert sein. Ein mittelbarer axialer Formschluß ist beispielsweise angegeben, wenn ein zusätzlicher Sicherungsring verwendet wird, ein unmittelbarer Formschluß liegt dann vor, wenn in der Lageraufnahme selbst konstruktive Ausgestaltungen vorgesehen sind, ohne das weitere Sicherungsmittel eingesetzt werden.

Da das Federelement mit Spiel in der Lageraufnahme liegt, sind vorteilhafterweise im Bereich der Lageraufnahme Sicherungsmittel für das Federelement angeordnet, die ein herausfallen des Federelements verhindern. Diese Sicherungsmittel weisen vorteilhafterweise Radialvorsprünge auf, die das Federelement zumindest ein Stück weit übergreifen.

Vorteilhafterweise können die Radialvorsprünge durch bereichsweises Umformen des in der Lageraufnahme angeordneten Anschlags gebildet sein. Dadurch wird ein unmittelbarer Formschluß des Federelements mit der Lageraufnahme hergestellt.

Vorteilhafterweise wird die Höhe des Anschlags der Lageraufnahme derart bestimmt, dass das Federelement im Bereich der optimalen Lagervorspannung betrieben wird, wobei die axiale Beweglichkeit des Lagerrings entsprechend begrenzt ist. Mit der Höhe des Anschlags läßt sich somit der zur Verfügung stehende Federweg für das Federelement festlegen.

Vorteilhafterweise ist sowohl im Kopfteil als auch im Deckel des Kopfteils ein Federelement angeordnet. Von besonderem Vorteil ist es dabei, wenn die Lageranordnung aus zwei Schulterlagern besteht, welche in einer X-Anordnung angeordnet sind, wobei die Schulterlagern als Kugellager ausgebildet sind.

Gemäß einer Weiterbildung kann der äußere Lagerring über ein Ringelement in radialer Richtung federelastisch gelagert und vorzugsweise in axialer Richtung gegen die Federkraft des Ringelements verschiebbar sein, so dass insgesamt mit der Lageranordnung auf einfache Weise ein schwimmende Lagerung erreicht wird. Bei der axialen Verschiebung des Lagerrings müssen durch das federelastische Ringelement resultierende Reibungskräfte überwunden werden, wodurch sich eine Dämpfungscharakteristik für Schwingungen, insbesondere im Leerlauf, einstellt. Darüber hinaus verhindert das Ringelement ein Verdrehen des äußeren Lagerrings.

Vorteilhafterweise ist das Federelement als Wellfeder mit vorzugsweise mindestens drei Wellentäler ausgebildet, wodurch eine axiale Festlegung des Federelements in einfacher Weise begünstigt wird und die vorteilhafte Federkennlinie der Wellfeder zur Erhaltung der optimalen Lagervorspannung ausgenutzt werden kann. Dabei kann die Wellfeder in den Wellentälern gesichert sein. Der Einsatz einer Wellfeder hat den Vorteil, dass die Bauhöhe im Vergleich zu einem O-Ring sehr gering ist. Dieser Vorteil ist hoch zu bewerten, da die Verringerung des Bauraums zu einer Verringerung der äußeren Abmessungen des Kopfteils. Darüber hinaus besteht bei einer Wellfeder aus metallischem Werkstoff nicht die Gefahr des Quellens. Eine Wellfeder mit mindestens drei Wellentälern hat den Vorteil, dass die Wellfeder auf drei Punkten definiert auf der Auflagefläche aufliegt und an dem äußeren Lagerring über die Wellenberge anliegt. Bereits bei Verwendung einer Wellfeder mit zwei Wellentälern ist unter Krafteinwirkung eine definierte Anlage gegeben, ohne Krafteinwirkung kippt die Wellfeder allerdings in eine Richtung um.

Besonders vorteilhaft ist es, wenn die Sicherungsmittel Radialvorsprünge aufweisen, die entsprechend der auf der Auflagefläche der Lageraufnahme aufliegenden Wellentäler der Wellfeder über den Umfang verteilt angeordnet sind.

### Kurzbeschreibung der Zeichnung

In der Zeichnung sind verschiedene Ausführungsbeispiele der Erfindung dargestellt. Es zeigt die
- Fig. 1: ein Kopfteil eines zahnärztlichen Handstücks mit einem mittels einer Lageranordnung drehbar gelagerten Rotor, die
- Fig. 2: eine Detailansicht einer ersten Ausführungsform für die Erzeugung der Vorspannung mittels einer Wellfeder, die
- Fig. 3: eine perspektivische Teilansicht auf die Wellfeder gem. Fig. 2, die
- Fig. 4: eine perspektivische Teilansicht gem. Fig. 3 mit einer vollständigen Wellfeder, die
- Fig. 5: ein weiteres Ausführungsbeispiel mit einer durch einen Sicherungsring gehaltenen Wellfeder, die
- Fig. 6: der Teilansicht einer Ausgestaltung des Sicherungsrings gemäß Fig. 5, die
- Fig. 7: eine weitere Ausgestaltung des Sicherungsrings gemäß Fig. 5 und die
- Fig. 8: ein Diagramm über den Kraft-Wegverlauf mit einem optimalen Arbeitsbereich für die Wellfeder.

### Ausführungsbeispiele

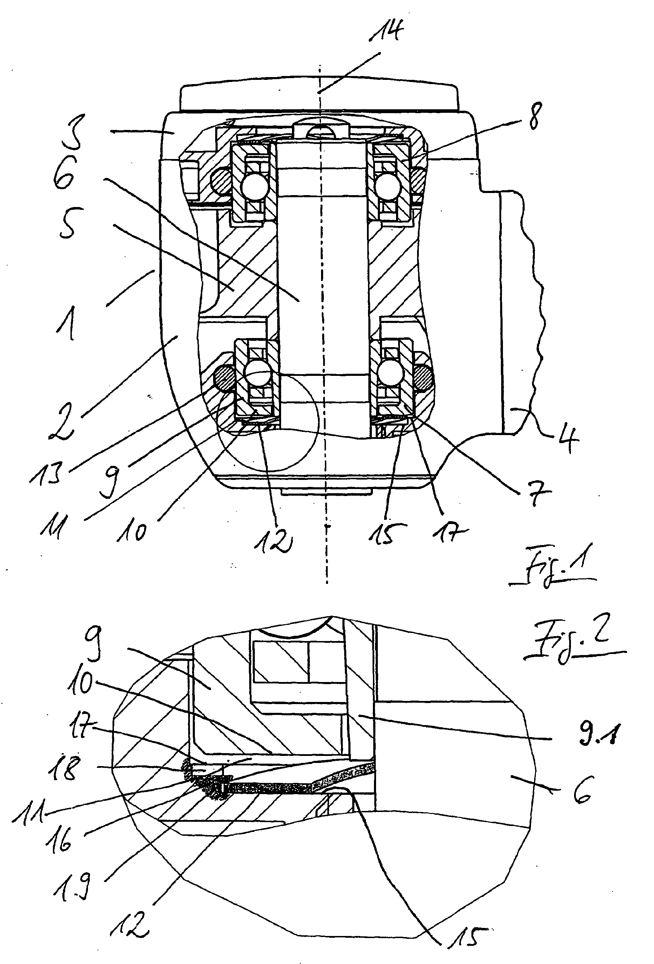

Das in Fig. 1 dargestellte Kopfteil 1 eines zahnärztliche Handstücks umfaßt ein Kopfgehäuse 2 und einen Deckel 3 sowie ein nicht näher dargestelltes Anschlußstück zu einem Griffteil 4. Innerhalb des Kopfgehäuses ist ein Rotor 5 auf einer Rotorwelle 6 befestigt, wobei die Rotorwelle 6 in einer Lageranordnung drehbar gelagert ist, die aus zwei Schulterlagern 7, 8 besteht, welche in einer X-Anordnung angeordnet sind.

Das Lager 7, 8 umfaßt einen äußeren Lagerring 9, der eine axiale Anschlagfläche 10 aufweist. Das Lager 7 ist in einer Lageraufnahme 11 des Kopfgehäuses 2 angeordnet, in welcher weiterhin eine Wellfeder 12 als Ausführungsbeispiel für ein Federelement eingelegt ist.

Abhängig vom Anwendungsfall können auch federelastische O-Ringe, Quad-Ringe, Tellerfedern oder sonstige elastische Ringe zur Anwendung gelangen, wenn deren Federkennlinie die erforderlichen Kräfte bei dem vorgegebenen Weg bereitstellt. Die Höhe des Anschlags richtet sich dann nach der maximal zulässigen Quetschung des O-Rings, ohne dass bleibende Veränderungen der Federkennlinie zu befürchten sind.

Die hier beschriebene Lageranordnung findet sich im Bereich des Lagers 8 im Deckel 3 entsprechend wieder. Der äußere Lagerring wird von einem elastisch verformbaren O-Ring 13 radial gegen das Kopfgehäuse 2 federnd gelagert, wobei der äußere Lagering 9 in Richtung der Drehachse 14 des Rotors verschiebbar ist.

In der Lageraufnahme 11 ist eine Auflagefläche 15 vorhanden, auf der die Wellfeder 12 aufliegt. Auf dem äußeren Umfang der Auflagefläche 15 ist ein Anschlag 16 angeordnet, dessen Anschlagsfläche 17 gegenüber der Auflagefläche 15 eine Höhe aufweist, die mindestens der Dicke der Wellfeder 12 entspricht und hier etwa das doppelte der Dicke beträgt. Dabei wird unter der Dicke der Wellfeder die Dicke des Materials verstanden und nicht etwa der größte Abstand der Wellentäler gegenüber der Wellenberge.

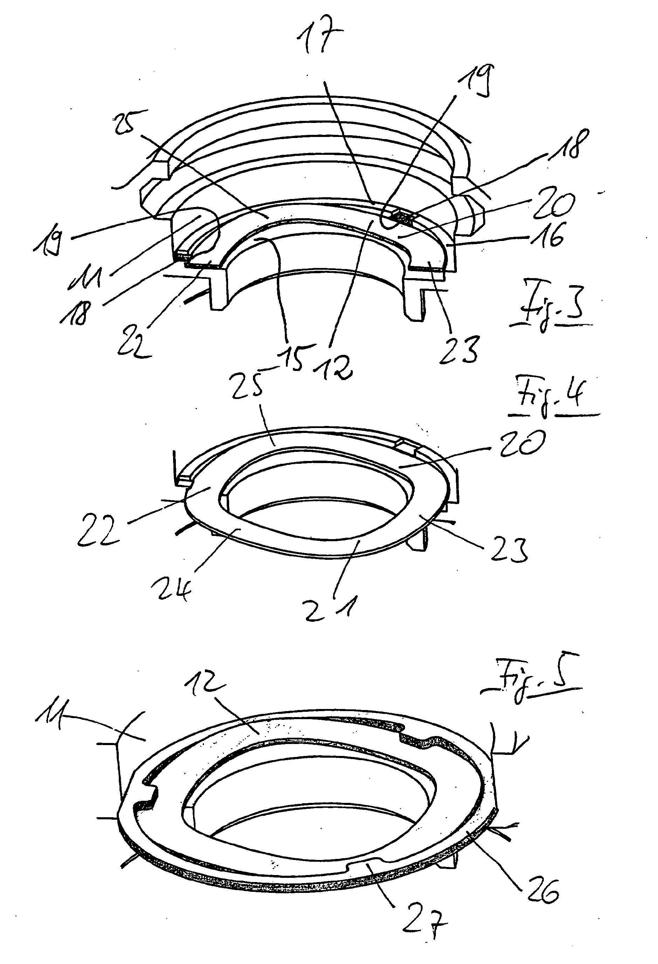

In Fig. 2 ist eine Vergrößerung der Lageraufnahme 11 aus Fig. 1 dargestellt, in der zunächst der äußere Lagerring 9 mit seiner axialen Anschlagfläche 10 zu erkennen ist. Darüber hinaus ist einen Innenring 9.1 des Lagers gezeigt, der auf der Rotorachse 6 aufsitzt. Zwischen der axialen Anschlagfläche 10 des Lagerrings 9 und der Auflagefläche 15 ist die Wellfeder 12 angeordnet, wobei in dieser Darstellung gerade ein Wellental auf der Auflagefläche 15 aufliegt. Zu erkennen ist weiterhin der Anschlag 16 mit der Anschlagsfläche 17, auf welche der Lagerring 10 bei einer Axialverschiebung anliegt. Der Anschlag 16 ist im dargestellten, geschnittenen Bereich mit einer Einprägung 18 und einem sich aus verdrängtem Material der Einprägung 18 gebildeten Vorsprung 19 versehen, wobei sich der Vorsprung 19 über die Oberseite der Wellfeder 12 im Wellental ein Stück weit erstreckt.

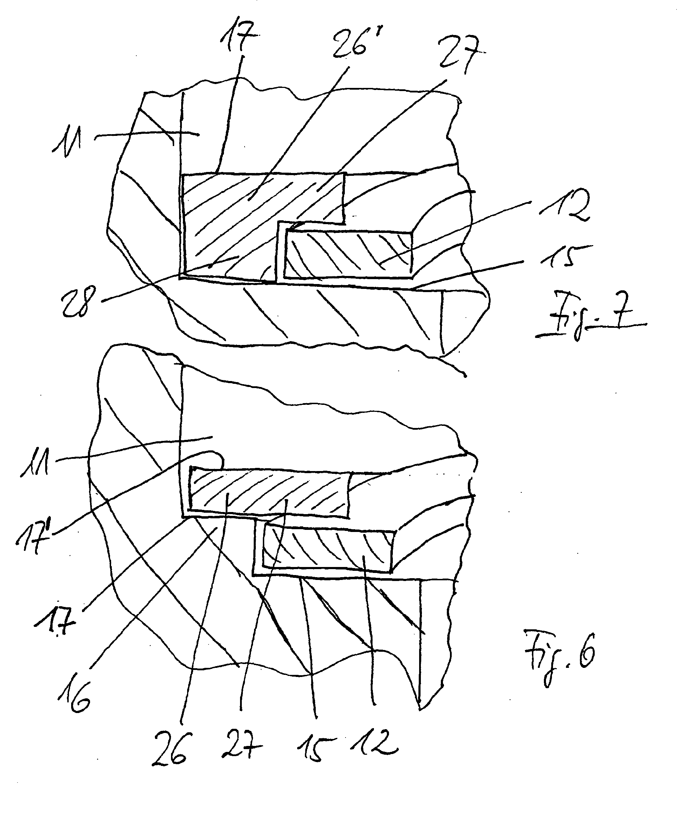

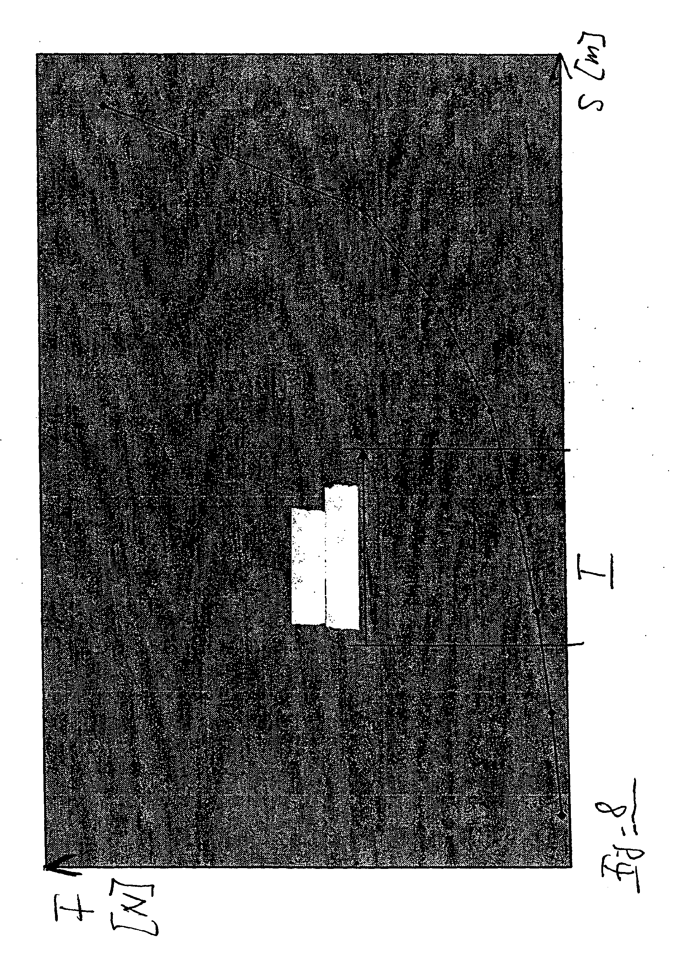

In Fig. 3 und Fig. 4 ist eine Wellfeder 12 mit drei Wellentälern 20, 21, 22 und drei Wellenberge 23, 24, 25 gezeigt, die in einer Lageraufnahme 11 unverlierbar festgehalten ist. Die Lageraufnahme 11 weist hierzu in die Anschlagfläche 17 des Anschlags 16 eingebrachte Einprägungen 18 im Bereich der Wellentäler 20, 22 auf, die sich ein Stück weit unter Ausbildung des Radialvorsprungs 19 über die Oberseite der Wellfeder 12 erstrecken.

In Fig. 5 ist ein anderes Sicherungsmittel für die unverlierbare Festlegung der Wellfeder 12 in der Lageraufnahme 11 in Form eines Sicherungsringes 26 gezeigt, der seinerseits Vorsprünge 27 aufweist, welche die Wellentäler der Wellfeder 12 ein Stück weit übergreifen. Der Sicherungsring 26 kann in die Lageraufnahme 11 eingeklemmt sein.

Ausgestaltungen des Sicherungsrings 27 sind in den Fig. 6 und 7 wiedergegeben. Der in Fig. 6 dargestellte Sicherungsring ist im Bereich eines Vorsprungs 27 im Schnitt dargestellt. Es ist zu erkennen, dass der Sicherungsring 26 auf der in der Lageraufnahme 11 befindlichen Anschlagsfläche 17 des Anschlags 16 aufliegt, wobei über den Vorsprung 27 die Wellfeder 12 ein Stück weit übergriffen wird. Die Höhe der Anschlagsfläche 17 über der Auflagefläche 15 entspricht mindestens der Dicke der Wellfeder und übertrifft im Ausführungsbeispiel diese Dicke, so dass die Wellfeder mit einem gewissen Spiel gehalten ist. Die Anschlagsfläche 17 des Anschlags 16 kommt jedoch nicht mit dem äußeren Lagerring in Kontakt, da dieser auf der Oberseite 17' des Sicherungsrings 27 aufliegt.

Der in Fig. 7 dargestellte Sicherungsring 26' ist so ausgebildet, dass auf einen Anschlag in der Lageraufnahme 11 verzichtet werden kann. Dazu weist der Sicherungsring 26 Strich einen die Wellfeder 12 umfangseitig über die gesamte Dicke der Wellfeder umschließenden Bund 28 auf, der auf der Auflagefläche 15 der Lageraufnahme 11 direkt aufliegt. Oberhalb des umlaufenden Bundes 28 sind Vorsprünge 27 vorgesehen, welche die Wellfeder in den Wellentälern ein Stück weit übergreifen.

Sowohl die in Fig. 6 als auch in Fig. 7 dargestellte Ausführungsform des Sicherungsrings 26, 26' wird im Sinne der Erfindung als mittelbarer axialer Formschluß der Wellfeder 12 mit dem Gehäuse angesehen. Aus diesen Figuren ist weiterhin ersichtlich, dass der Anschlag 16 auch die radiale Bewegung der Wellfeder beschränkt, wobei hier jedoch ein ausreichendes Spiel vorhanden ist, um Raum für die beim Einfedern der Wellfeder erfolgende radiale Ausdehnung zu geben.

In Fig. 8 ist schließlich ein Kraft-Weg-Diagramm mit der Federkennlinie der Wellfeder gezeigt, wobei mit dem Bereich I der Bereich der optimalen Lagervorspannung angegeben ist. Die Wellfeder selbst wird aufgrund des Anschlags nicht plattgedrückt, was für die Wellfeder einen Fall der Überbeanspruchung darstellen würde. Dies bedeutet, dass die Federcharakteristik für lange Zeit erhalten bleibt, was eine hohe Lebensdauer bedeutet. Wesentlich ist, dass zur Schwingungsentkopplung zwischen Rotorwelle und Gehäuse eine weiche Aufhängung vorteilhaft ist, was durch die erfindungsgemäße Lehre verwirklicht werden kann.

Anhand der Federkennlinie ist zu erkennen, daß sich in dem bevorzugtem Bereich I die Federkraft F über einen weiten Verstellweg s im Vergleich zur gesamten Federkraft geringen Umfang verändert, was es ermöglicht, die Lagervorspannung innerhalb der zulässigen Grenzen zu halten, solange die Lager nicht gegen den Anschlag laufen.

Wesentlich für das Funktionieren der geschilderten Lageranordnung ist weiterhin, daß das Federelement ausschließlich auf den äußeren Lagerring einwirkt, das also auf den inneren Lagerring 18 nicht eingewirkt wird.

## Patentansprüche

1. Zahnärztliches Handstück, aufweisend ein Kopfteil (1) mit einem mittels einer Lageranordnung drehbar gelagerten Rotor (5), wobei die Lageranordnung einen in Richtung einer Drehachse (14) des Rotors (5) verschiebbar gehaltenen äußeren Lagerring (9) mit einer axialen Anschlagfläche (10) umfasst und weiterhin eine Lageraufnahme (11) des äußeren Lagerrings (9) eine Auflagefläche (15) aufweist, auf der ein die Vorspannung der Lageranordnung definierendes Federelement (12), vorzugsweise eine Wellfeder aufliegt, wobei das Federelement (12) mit der axialen Anschlagfläche (10) des äußeren Lagerrings (9) zusammenwirkt, **dadurch gekennzeichnet, dass** im Bereich der Auflagefläche (15) am äußeren Umfang ein Anschlag (16) angeordnet ist, dessen Anschlagsfläche (17) gegenüber der Auflagefläche (15) eine Höhe aufweist, die mindestens der kleinsten zulässigen Dicke des Federelements (12) entspricht.

2. Zahnärztliches Handstück nach Anspruch 1, **dadurch gekennzeichnet, daß** im Bereich der Lageraufnahme (11) Sicherungsmittel für das Federelement (12) angeordnet sind, die ein Herausfallen des Federelements (12) verhindern.

3. Zahnärztliches Handstück nach Anspruch 1 oder 2, **dadurch gekennzeichnet, daß** das Federelement (12) durch unmittelbaren oder mittelbaren axialen Formschluss mit dem Gehäuse gesichert ist.

4. Zahnärztliches Handstück nach Anspruch 3, **dadurch gekennzeichnet, daß** die Sicherungsmittel Radialvorsprünge (19; 27) aufweisen, die das Federelement (12) zumindest ein Stück weit übergreifen.

5. Zahnärztliches Handstück nach einem der Ansprüche 1 bis 4, **dadurch gekennzeichnet, daß** die Radialvorsprünge (19) durch bereichsweises Umformen eines in der Lageraufnahme angeordneten Anschlags (16) gebildet ist.

6. Zahnärztliches Handstück nach einem der Ansprüche 1 bis 5, **dadurch gekennzeichnet, daß** die Höhe des Anschlags der Lageraufnahme derart bestimmt ist, daß das Federelement (12) im Bereich der optimalen Lagervorspannung betrieben wird, wobei die axiale Beweglichkeit des Lagerrings entsprechend begrenzt ist.

7. Zahnärztliches Handstück nach einem der Ansprüche 1 bis 6, **dadurch gekennzeichnet, daß** sowohl im Kopfteil (1) als auch in einem Deckel (3) des Kopfteils ein Federelement (12) angeordnet ist.

8. Zahnärztliches Handstück nach einem der Ansprüche 1 bis 7, **dadurch gekennzeichnet, daß** die Lageranordnung aus zwei Schulterlagern besteht, welche in einer X-Anordnung angeordnet sind, insbesondere aus Kugellagern.

9. Zahnärztliches Handstück nach einem der Ansprüche 1 bis 8, **dadurch gekennzeichnet, daß** der äußere Lagerring (9) über ein Ringelement (13) in radialer Richtung federelastisch gelagert und in axialer Richtung gegen die Federkraft des Federelements (12) verschiebbar ist.

10. Zahnärztliches Handstück nach einem der Ansprüche 1 bis 9, **dadurch gekennzeichnet, daß** das Federelement als Wellfeder ausgebildet ist, die vorzugsweise mindestens drei Wellentäler (20, 21, 22) aufweist.

11. Zahnärztliches Handstück nach Anspruch 10, **dadurch gekennzeichnet, dass** die Wellfeder (12) in den Wellentälern (20, 21, 22) gesichert ist.

12. Zahnärztliches Handstück nach Anspruch 10 oder 11, **dadurch gekennzeichnet, dass** die Sicherungsmittel Radialvorsprünge (19; 27) aufweisen, die entsprechend der auf der Auflagefläche der Lageraufnahme (11) aufliegenden Wellentäler der Wellfeder (12) über den Umfang verteilt angeordnet sind.

## Claims

1. A dental handpiece, exhibiting a head piece (1) having a rotor (5) mounted for rotation by means of a bearing configuration consisting of an external bearing ring (9) mounted for displacement in the direction of a rotation axis (14) of the rotor (5) and having an axial stop limit surface (10) and further a bearing support (11) on the external bearing ring (9) has a bearing face (15), on which the resilient element (12), preferably a wave spring defining the bias of the bearing configuration, rests, which resilient element (12) cooperates with said axial stop limit surface (10) on the external bearing ring (9), **characterized in that** in the region of said bearing face (15) at the periphery thereof there is disposed a stop member (16) whose stop surface (17) is at a level above the bearing face (15) which is equal to at least the smallest permissible thickness of said resilient element (12).

2. A dental handpiece as defined in claim 1, **characterized in that** in the region of said bearing support (11) there are disposed safety means for said resilient element (12) which prevent said resilient element (12) from falling out.

3. A dental handpiece as defined in claim 1 or claim 2, **characterized in that** said resilient element (12) is secured by a direct or indirect axial positive fit with the housing.

4. A dental handpiece as defined in claim 3, **characterized in that** said safety means have radial projections (19; 27) which overlap said resilient element (12) by at least a considerable amount.

5. A dental handpiece as defined in any one of claims 1 to 4, **characterized in that** said radial projections (19) are formed by regional reshaping of a stop member (16) disposed in said bearing support.

6. A dental handpiece as defined in any one of claims 1 to 5, **characterized in that** the level of the stop member of said bearing support is such that said resilient element (12) is operated in the region of optimal bias on said bearings, the axial mobility of said bearing ring being correspondingly restricted.

7. A dental handpiece as defined in any one of claims 1 to 6, **characterized in that** a resilient element (12) is disposed both in the head piece (1) and in a cover (3) of said head piece.

8. A dental handpiece as defined in any one of claims 1 to 7, **characterized in that** said bearing configuration consists of two separable bearings arranged in an "X" configuration, particularly ball bearings.

9. A dental handpiece as defined in any one of claims 1 to 8, **characterized in that** said external bearing ring (9) is resiliently mounted in the radial direction via an annular element (13) and is adapted for displacement in the axial direction against the elastic force of said resilient element (12).

10. A dental handpiece as defined in any one of claims 1 to 9, **characterized in that** said resilient element is in the form of a wave spring preferably having at least three wave troughs (20, 21, 22).

11. A dental handpiece as defined in claim 10, **characterized in that** said wave spring (12) is secured in the wave troughs (20, 21, 22).

12. A dental handpiece as defined in claim 10 or claim 11, **characterized in that** said safety means have radial projections (19; 27) which are distributed around the periphery corresponding to the wave troughs of said wave spring (12) resting on the bearing face of said bearing support (11).

## Revendications

1. Pièce à main dentaire, présentant une partie de tête (1) avec un rotor (5) monté à rotation au moyen d'un agencement de palier, l'agencement de palier comprenant un anneau de palier extérieur (9) maintenu de manière coulissante dans la direction d'un axe de rotation (14) du rotor (5) avec une surface de butée axiale (10), et en outre un logement de palier (11) de l'anneau de palier extérieur (9) présentant une surface d'appui (15), sur laquelle repose un élément de ressort (12) définissant la précontrainte de l'agencement de palier, de préférence une rondelle élastique, l'élément de ressort (12) coopérant avec la surface de butée axiale (10) de l'anneau de palier extérieur (9), **caractérisée en ce que** dans la région de la surface d'appui (15) sur la périphérie extérieure, on prévoit une butée (16) dont la surface de butée (17) présente par rapport à la surface d'appui (15) une hauteur qui correspond au moins à la plus petite épaisseur admissible pour l'élément de ressort (12).

2. Pièce à main dentaire selon la revendication 1, **caractérisée en ce que** dans la région du logement de palier (11) sont disposés des moyens de fixation pour l'élément de ressort (12), lesquels empêchent l'élément de ressort (12) de tomber.

3. Pièce à main dentaire selon la revendication 1 ou 2, **caractérisée en ce que** l'élément de ressort (12) est fixé par engagement par coopération de forme axial, direct ou indirect avec le boîtier.

4. Pièce à main dentaire selon la revendication 3, **caractérisée en ce que** les moyens de fixation présentent des saillies radiales (19 ; 27) qui viennent en prise au moins sur une petite distance par-dessus l'élément de ressort (12).

5. Pièce à main dentaire selon l'une quelconque des revendications 1 à 4, **caractérisée en ce que** les saillies radiales (19) sont formées par façonnage au moins partiel d'une butée (16) disposée dans le logement de palier.

6. Pièce à main dentaire selon l'une quelconque des revendications 1 à 5, **caractérisée en ce que** la hauteur de la butée du logement de palier est définie de telle sorte que l'élément de ressort (12) soit actionné dans la plage de la précontrainte de palier optimale, la mobilité axiale de l'anneau de palier étant limitée en conséquence.

7. Pièce à main dentaire selon l'une quelconque des revendications 1 à 6, **caractérisée en ce que** tant dans la partie de tête (1) que dans un couvercle (3) de la partie de tête, on dispose un élément de ressort (12).

8. Pièce à main dentaire selon l'une quelconque des revendications 1 à 7, **caractérisée en ce que** l'agencement de palier se compose de deux paliers à épaulements qui sont disposés suivant un agencement en X, notamment des roulements à billes.

9. Pièce à main dentaire selon l'une quelconque des revendications 1 à 8, **caractérisée en ce que** l'anneau de palier extérieur (9) est monté de manière élastique à ressort dans la direction radiale par le biais d'un élément d'anneau (13) et peut être déplacé dans la direction axiale à l'encontre de la force de ressort de l'élément de ressort (12).

10. Pièce à main dentaire selon l'une quelconque des revendications 1 à 9, **caractérisée en ce que** l'élément de ressort est réalisé sous forme de rondelle élastique, qui présente de préférence au moins trois creux d'ondulation (20, 21, 22).

11. Pièce à main dentaire selon la revendication 10, **caractérisée en ce que** la rondelle élastique (12) est fixée dans les creux d'ondulation (20, 21, 22).

12. Pièce à main dentaire selon la revendication 10 ou 11, **caractérisée en ce que** les moyens de fixation présentent des saillies radiales (19 ; 27) qui sont disposées de manière répartie sur la périphérie de manière correspondant aux creux d'ondulation de la rondelle élastique (12) s'appliquant sur la surface d'appui du logement de palier (11).
